# EUROPEAN PATENT APPLICATION

(11) **EP 3 474 435 A1**
(43) Date of publication of application: **24.04.2019**
(21) Application number: 17815065.2
(22) Date of filing: 18.05.2017
(51) Int. Cl.: H02P 1/44, H02P 23/07

(54) **SINGLE-PHASE INDUCTION MOTOR**

(30) Priority: 20.06.2016 JP 2016121622; 17.02.2017 JP 2017028276
(71) Applicant: Ebara Corporation, Ohta-ku, Tokyo 144-8510 (JP)
(72) Inventor: OYAMA, Atsushi, Tokyo 144-8510 (JP); YOSHIDA, Toshiya, Tokyo 120-8551 (JP)
(74) Representative: Klang, Alexander H.
(86) International application number: PCT/JP2017/018617
(87) International publication number: WO 2017/221595

(57) **Abstract**

A capacitor-start single-phase induction motor which can obtain a large startup torque is provided. The single-phase induction motor includes a main coil, an auxiliary coil connected in parallel with the main coil, a capacitor connected in series with the auxiliary coil, and a governor circuit executing control of a current supplied from the capacitor to the auxiliary coil, and the governor circuit executes startup control of repeating an operation of causing transition of the auxiliary coil from a non-conducting state to a conducting state and of causing transition to the non-conducting state again once during a period less than a half cycle of a voltage of an input power supply of the single-phase induction motor. When the auxiliary coil is in the conducting state, the current flows from the capacitor to the auxiliary coil, and the startup torque can be obtained.

## Description

### TECHNICAL FIELD

The present technology relates to a single-phase induction motor.

### BACKGROUND ART

The single-phase induction motor is used in many fields including a pump, a compressor, an air-conditioning device and the like. One of the single-phase induction motors is a capacitor-start single-phase induction motor using a start capacitor. This capacitor is used for supplying an appropriate voltage to a main coil and an auxiliary coil in a start process of the single-phase induction motor. Conventionally, various methods have been used for obtaining a startup torque of the capacitor-start single-phase induction motor. For example, a start capacitor with a large capacitance was used in some cases in order to obtain a startup torque. Moreover, in an art described in Patent Literature 1, two capacitors connected in parallel are used so as to ensure a large electrostatic capacitance at start and to obtain the startup torque.

### CITATION LIST

### PATENT LITERATURE

PTL 1: Japanese Patent Laid-Open No. 2012-115034

### SUMMARY OF INVENTION

### TECHNICAL PROBLEM

However, when the motor has reached a rated rotation number, the capacitor and a coil connected to the capacitor work as loss members and lower driving efficiency of the motor. Therefore, if the capacitance of the capacitor is increased in order to make the startup torque larger, driving efficiency of the induction motor during the rated rotation number operation is lowered. This art is made in view of the aforementioned problem and one of its objects is to reduce a loss in rated rotation number operation and to improve driving efficiency in the capacitor-start single-phase induction motor.

Moreover, in configuration in Patent Literature 1, a plurality of capacitors is needed. Another one of the objects of the art is to obtain a startup torque economically in the single-phase induction motor.

### SOLUTION TO PROBLEM

This art is intended to solve at least a part of the aforementioned problems at least partially.

According to a first aspect, a single-phase induction motor is characterized by including a main coil, an auxiliary coil connected in parallel with the main coil, a capacitor connected in series with the auxiliary coil, and a governor circuit executing control of a current supplied from the capacitor to the auxiliary coil, the governor circuit executes startup control of repeating an operation of transition of the auxiliary coil from a non-conducting state to a conducting state and of causing transition to the non-conducting state again once during a period less than a half cycle of an input power voltage of the single-phase induction motor, and the current flows from the capacitor to the auxiliary coil when the auxiliary coil is in the conducting state.

According to this aspect, by cyclically controlling the transition of the governor circuit between the non-conducting state and the conducting state, a resonant state is created by the capacitance of the start capacitor and impedance of the auxiliary coil, and an exciting current at the start can be increased. As a result, a large startup torque can be obtained in the single-phase induction motor.

According to a second aspect, the single-phase induction motor described in the first aspect is characterized in that the governor circuit includes a triac connected in series with the auxiliary coil and a control circuit connected to the triac and generating a gate signal of the triac, and the startup control is executed by switching/controlling the triac on the basis of the gate signal.

According to a third aspect, the single-phase induction motor described in the first aspect is characterized in that the governor circuit is set so as to repeat an operation of causing transition from the non-conducting state to the conducting state and of causing transition to the non-conducting state again once during a half cycle of the input power voltage and once each when the input power voltage is positive and negative during one cycle of the input power voltage, that is, twice, and once when the input power voltage is positive or negative during one cycle of the input power voltage or once during a predetermined number of cycles of the input power voltage.

According to this aspect, by setting a cycle in which the transition operation of the auxiliary coil is generated as appropriate, a charge amount accumulated in the start capacitor can be changed.

According to a fourth aspect, the single-phase induction motor described in the first aspect is characterized in that the governor circuit is configured to execute the startup control during a period of time from when the single-phase induction motor is powered on until the single-phase induction motor has reached a predetermined rotation speed and to execute steady control after the single-phase induction motor has reached the predetermined rotation speed.

According to this aspect, the startup torque is obtained without increasing the capacitance of the start capacitor in the startup control. Therefore, driving efficiency of the motor during the steady control can be improved by suppressing an influence of the start capacitor working as a capacitive load.

According to a fifth aspect, the single-phase induction motor described in the fourth aspect is characterized in that the auxiliary coil is brought into the normally conducting state during the steady control.

According to a sixth aspect, the single-phase induction motor described in the fourth aspect is characterized in that the auxiliary coil is brought into the normally non-conducting state during the steady control.

According to this aspect, during the steady control, the start capacitor is separated from the circuit of the single-phase induction motor. Therefore, there is no influence by the start capacitor working as the capacitive load, and the driving efficiency of the motor during the steady control can be improved.

According to a seventh aspect, the single-phase induction motor described in the first aspect is characterized in that the governor circuit causes transition of the auxiliary coil from the non-conducting state to the conducting state if an absolute value of the input power voltage rises to a predetermined voltage or more in the startup control and causes transition to the non-conducting state again when a resonance current by the capacitor and the auxiliary coil becomes substantially zero.

According to an eighth aspect, the single-phase induction motor described in the first aspect is characterized in that the governor circuit executes the startup control for a predetermined period of time from when the input power voltage is supplied and changes to the steady control after the predetermined time has elapsed.

According to a ninth aspect, the single-phase induction motor described in the first to eighth aspects is characterized in that the electrostatic capacitance of the capacitor is set so that a resonance frequency of a resonance circuit constituted by the auxiliary coil when a rotor of the single-phase induction motor is stopped and the capacitor is twice or more of a frequency of the input power voltage.

According to this aspect, the resonance frequency finalized by the electrostatic capacity of the start capacitor and inductance of the auxiliary coil can be set as appropriate. As a result, a peak current is generated in a field coil on the basis of the resonance frequency finalized by the capacity of the start capacitor, and an instantaneous startup torque can be made larger.

According to a tenth aspect, the single-phase induction motor described in the seventh aspect is characterized in that a gate signal of the triac connected in series with the auxiliary coil is turned on when the predetermined voltage is one fifth or more of a peak voltage of the input power voltage.

According to an eleventh aspect, the single-phase induction motor described in the second aspect is characterized in that the triac is turned off when an absolute value of the input power voltage is substantially equal to a peak voltage of the input power voltage.

According to a twelfth aspect, the single-phase induction motor described in the second aspect is characterized in that a period of time from when a gate signal of the triac is turned on until it is turned off is shorter than a half-cycle of a resonance cycle of a resonance circuit constituted by the auxiliary coil and the capacitor.

According to a thirteenth aspect, a single-phase induction motor is characterized by including a main coil, an auxiliary coil connected in parallel with the main coil, a first capacitor connected in series with the auxiliary coil, a second capacitor connected in parallel with the first capacitor and connected in series with the auxiliary coil, and a first governor circuit connected between the first capacitor and the auxiliary coil and configured to control a current supplied from the first capacitor to the auxiliary coil, the first governor circuit is configured to execute startup control of repeating an operation of causing transition of the auxiliary coil from a non-conducting state to a conducting state and of causing transition to the non-conducting state again once during a period less than a half cycle of an input power voltage of the single-phase induction motor so that a current flows to the auxiliary coil from the first capacitor when the auxiliary coil is in the conducting state.

According to this aspect, during the startup control, the startup torque of the single-phase induction motor can be made larger by the second capacitor.

According to a fourteenth aspect, the single-phase induction motor described in the thirteenth aspect is characterized in that the first governor circuit brings the first capacitor and the auxiliary coil into a normally conducting state or in a normally non-conducting state during the steady control.

According to this aspect, in the steady control, the number of start capacitors connected to the auxiliary coil 2 can be selected as appropriate by using the first governor circuit.

According to a fifteenth aspect, the single-phase induction motor described in the thirteenth aspect is characterized by further including a second governor circuit connected between the second capacitor and the auxiliary coil and configured to execute control of a current supplied from the second capacitor to the auxiliary coil, the second governor circuit is configured to execute startup control of repeating an operation of causing transition of the auxiliary coil from a non-conducting state to a conducting state and of causing transition to the non-conducting state again once during a period less than a half cycle of an input power voltage of the single-phase induction motor so that a current flows to the auxiliary coil from the second capacitor when the auxiliary coil is in the conducting state.

According to this aspect, during the startup control, the startup torque can be obtained by a peak current flowing from the second capacitor to the auxiliary coil in addition to the peak current flowing from the first capacitor to the auxiliary coil.

According to a sixteenth aspect, the single-phase induction motor described in the fifteenth aspect is characterized in that, while an absolute value of the input power voltage of the single-phase induction motor is one fifth or more of a peak voltage of the input power voltage, the first governor circuit causes transition of a state between the first capacitor and the auxiliary coil from a non-conducting state to a conducting state, and the second governor circuit causes transition of a state between the second capacitor and the auxiliary coil from the non-conducting state to the conducting state.

According to this aspect, a sufficient startup torque can be obtained from input power energy.

According to a seventeenth aspect, the single-phase induction motor described in the fifteenth or sixteenth aspect is characterized in that a timing when the first governor circuit causes transition of the state between the first capacitor and the auxiliary coil from a non-conducting state to a conducting state and a timing when the second governor circuit causes transition of the state between the second capacitor and the auxiliary coil from the non-conducting state to the conducting state are different.

According to this aspect, the peak current flowing through the auxiliary coil 2 flows twice or more during a period less than a half cycle of an input power voltage. As a result, a period of time during which a maximum output torque of the single-phase induction motor is maintained can be made longer.

According to an eighteenth aspect, the single-phase induction motor described in any one of the fifteenth to seventeenth aspects is characterized in that a capacitance of the first capacitor and a capacitance of the second capacitor can be arbitrarily selected.

According to this aspect, a magnitude of the peak current flowing through the auxiliary coil generated during a period less than a half cycle of the input power voltage is changed, whereby a mode of a rotary motion of the rotor can be adjusted as appropriate.

According to a nineteenth aspect, a single-phase induction motor is characterized by including a main coil, an auxiliary coil connected in parallel with the main coil, a first capacitor connected in series with the auxiliary coil, and a first governor circuit connected between the first capacitor and the auxiliary coil and configured to control a current supplied from the first capacitor to the auxiliary coil, the first governor circuit is configured to execute startup control of repeating an operation of causing transition of the auxiliary coil from a non-conducting state to a conducting state and of causing transition to the non-conducting state again once during a period less than a half cycle of an input power voltage of the single-phase induction motor so that a current flows to the auxiliary coil from the first capacitor when the auxiliary coil is in the conducting state.

According to a twentieth aspect, the single-phase induction motor described in the nineteenth aspect is characterized by further including a path which can connect the first governor circuit and the main coil, and the first governor circuit is connected to the path at all times in the steady control, whereby the main coil and the auxiliary coil having impedance different from that of the main coil are directly conducted.

### BRIEF DESCRIPTION OF DRAWINGS

Fig. 1 illustrates a block diagram of a capacitor-start single-phase induction motor including a governor circuit, according to an embodiment of the present art.
Fig. 2A illustrates a waveform of an input voltage in startup control, waveforms of currents flowing through a main coil and an auxiliary coil, and a gate signal of a triac according to the embodiment of the present art.
Fig. 2B illustrates an example of the waveforms of the currents flowing through the main coil and the auxiliary coil in the steady control and the gate signal of the triac according to the embodiment of the present art.
Fig. 2C illustrates an example of the waveforms of the currents flowing through the main coil and the auxiliary coil in the steady control and the gate signal of the triac according to the embodiment of the present art.
Fig. 3 illustrates a circuit diagram of a control circuit according to the embodiment of the present art.
Fig. 4 illustrates an example of the waveform of a main coil voltage, the gate signal of the triac, and the waveform of the current flowing through the auxiliary coil when the control circuit illustrated in Fig. 3 is used.
Fig. 5 illustrates a circuit diagram of a control circuit according to a second embodiment of the present art.
Fig. 6 illustrates an example of the waveform of the main coil voltage, the gate signal of the triac, and the waveform of the current flowing through the auxiliary coil when the control circuit illustrated in Fig. 5 is used.
Fig. 7 illustrates an operation flowchart of a governor circuit and the like according to the embodiment of the present art.
Fig. 8 illustrates waveforms of various signals obtained when the operation illustrated in Fig. 7 is performed.
Fig. 9A is a block diagram of the single-phase induction motor in the startup control according to a third embodiment of the present art.
Fig. 9B is a diagram illustrating various signal waveforms of the single-phase induction motor in the startup control according to the third embodiment of the present art.
Fig. 9C is a diagram illustrating various signal waveforms of the single-phase induction motor in the steady control according to the third embodiment of the present art.
Fig. 10A is a block diagram of the single-phase induction motor in the startup control according to a fourth embodiment of the present art.
Fig. 10B is a diagram illustrating various signal waveforms of the single-phase induction motor in the startup control according to the fourth embodiment of the present art.
Fig. 10C is a diagram illustrating various signal waveforms of the single-phase induction motor in the steady control according to the fourth embodiment of the present art.
Fig. 11A is a block diagram of the single-phase induction motor in the startup control according to a fifth embodiment of the present art.
Fig. 11B is a block diagram of the single-phase induction motor in the steady control according to the fifth embodiment of the present art.
Fig. 11C is a diagram illustrating various signal waveforms of the single-phase induction motor in the steady control according to the fifth embodiment of the present art.
Fig. 11D is a block diagram of the single-phase induction motor in the startup control according to the fifth embodiment of the present art.

### DESCRIPTION OF EMBODIMENTS

Hereinafter, a capacitor-start single-phase induction motor according to an embodiment of the present art and its operation will be described on the basis of drawings. In the attached drawings, the same or similar reference numerals are given to the same or similar elements, and duplicated description on the same or similar elements in description of each of the embodiments will be omitted in some cases. Moreover, features illustrated in each of the embodiments can be applied to other embodiments as long as they do not contradict each other.

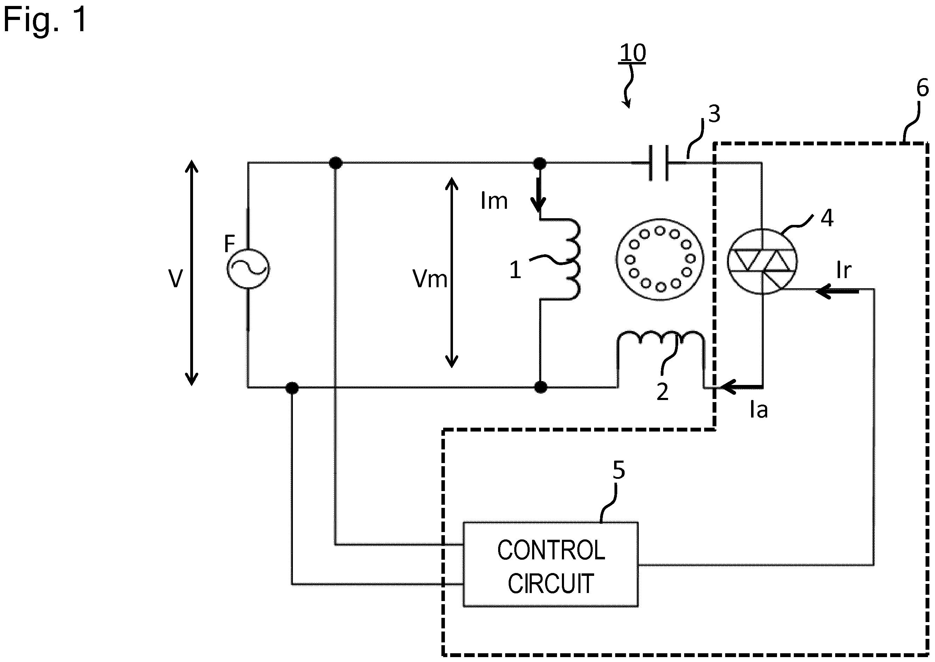

Fig. 1 illustrates a block diagram of a capacitor-start single-phase induction motor 10 according to an embodiment of the present art. As illustrated in Fig. 1, the capacitor-start single-phase induction motor 10 includes a main coil 1, an auxiliary coil 2, and a start capacitor 3 and a triac 4 inserted in series with the auxiliary coil 2. The capacitor-start single-phase induction motor 10 further includes a control circuit 5. The control circuit 5 is connected both to an AC input power supply F and the triac 4. Note that in this Description, a circuit constituted by the triac 4 and the control circuit 5 is called a governor circuit 6. The control circuit 5 (or the governor circuit 6) executes control of a current supplied from the start capacitor 3 to the auxiliary coil 2 after the single-phase induction motor 10 is powered on, whereby an output torque of the single-phase induction motor 10 is adjusted. The control circuit 5 (or the governor circuit 6) monitors a rotation number of a rotor (rotor) of the single-phase induction motor 10. For a period of time from when the single-phase induction motor 10 is powered on until the rotation of the rotor reaches a predetermined rotation speed, the governor circuit executes startup control of repeating an operation of causing transition of the auxiliary coil 2 between the non-conducting state/a conducting state.

### <Startup control>

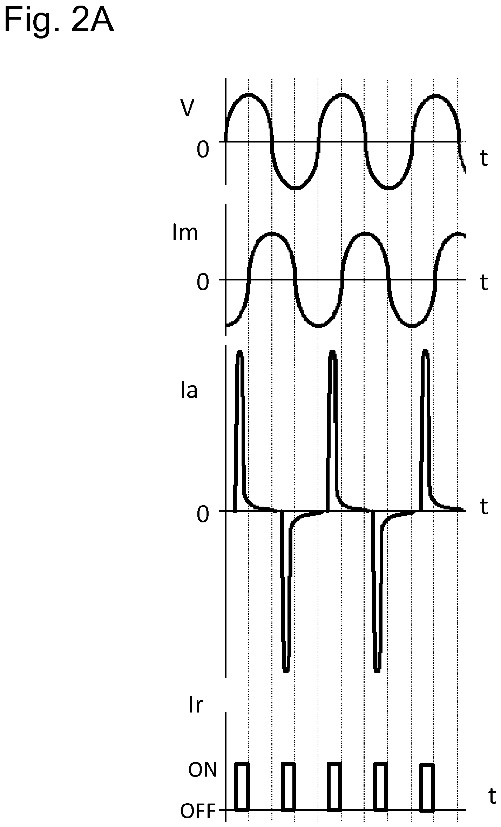

Fig. 2A illustrates various signal waveforms in the startup control according to the embodiment of the present art. By using a lateral axis for time (t), a waveform of a voltage V of the input power supply F is indicated on the uppermost stage, and a waveform of a current Im flowing through the main coil 1 in the startup control, corresponding to the input power voltage waveform is indicated on a second stage from the top. Moreover, Fig. 2A illustrates a waveform of a current Ia flowing through the auxiliary coil 2 in the startup control on a third stage and a waveform of a gate signal Ir of the triac 4 in the startup control on the lowest stage. A scale of the time(t) on the lateral axis is the same for all the stages. A phase of the current Ia flowing through the auxiliary coil 2 advances by approximately one fourth of a cycle (90°) to the phase of the current Im flowing through the main coil 1.

As illustrated in Fig. 2A, the current Ia flowing through the auxiliary coil 2 has a waveform with cyclic peaks each having a sharp shape. In Fig. 2A, a peak of an absolute value of the current Ia flowing through the auxiliary coil 2 appears once during a half cycle of the input power voltage V. The auxiliary coil current Ia has the same fundamental wave frequency as the power frequency. A period of time while the current Ia of the auxiliary coil 2 flows is less than the half cycle of the input power voltage V. The period of time while the current Ia of the auxiliary coil 2 flows is a period of time of approximately three fourths of the half cycle of the power voltage V in Fig. 2A, for example. Moreover, an absolute value of the peak current flowing through the auxiliary coil 2 is extremely larger than an absolute value of the peak current of the main coil 1 (approximately three times in Fig. 2A, for example). In Fig. 2A, the absolute value of the current Ia flowing through the auxiliary coil 2 is rapidly increased when it begins to flow and reaches a peak at a point of time when the magnitude of the current Im of the main coil 1 is substantially zero and then, rapidly decreases and converges.

The control circuit 5 (or the governor circuit 6) controls timing of turning on (ON)/off (OFF) of the triac 4 as appropriate in the startup control in order to supply a peak current to the auxiliary coil 2 in the startup control. The control circuit 5 monitors the input power voltage V of the input power supply F, and when the absolute value of the input power voltage V (or the voltage Vm of the main coil 1) becomes a predetermined first voltage vf1 or more, it turns on the gate signal of the triac 4. The predetermined first voltage vf1 preferably has some degree of magnitude with respect to the power voltage V or approximately one fifth or more of the peak of the absolute value of the power voltage V, for example. That is because the input power energy can be used as a startup torque. For example, in Fig. 2A, the gate signal Ir of the triac 4 is turned on when the absolute value of the input power voltage V is substantially 1/2 of the maximum.

When the triac 4 is turned on by the gate on signal, transition of the state between input power supply F and the auxiliary coil 2 is caused from non-conducting to conducting. Immediately after the triac 4 is turned on, the current flows from the start capacitor 3 to the auxiliary coil 2 by a resonance state generated by the start capacitor 3 and the auxiliary coil 2. Since a fundamental wave component of the current has an appropriate phase difference with respect to the main coil current Im and is supplied with large amplitude, the single-phase induction motor 10 obtains a large startup torque.

After that, in order to prepare for supply of the peak current at subsequent timing, the gate signal of the triac 4 is turned off. A period of time from when the gate signal of the triac 4 is turned on until it is turned off may be set shorter than the half cycle of the resonance cycle of the resonance circuit constituted by the auxiliary coil 2 and the start capacitor 3 in order to stop the resonance current in a half cycle.

Then, at a point of time when the current flowing through the triac 4 becomes substantially zero, a gate of the triac 4 is completely turned off, and for a period of time until when the triac 4 is turned on next time, the start capacitor 3 holds a charged state. Note that the triac 4 is preferably turned off when the absolute value of the input power voltage V is large (substantially equal to the peak voltage of the power voltage V, for example). That is because energy to be charged in the start capacitor 3 can be made larger.

As described above, in this embodiment, by cyclically controlling switching timing of turning on/off of the triac 4, the resonance state is created by the capacitance of the start capacitor 3 and the impedance of the auxiliary coil 2, the exciting current at start is increased so as to obtain the startup torque of the single-phase induction motor. By shortening a period of time from when the triac 4 is turned on until it is changed to OFF, that is, by prolonging the period of time from when the triac 4 is turned off until the triac 4 is turned on again next time, the start capacitor 3 can be fully charged so that a large startup torque can be obtained.

In this embodiment, further by setting the resonance frequency determined by the electrostatic capacitance of the start capacitor 3 and inductance of the auxiliary coil 2 as appropriate, the peak current is generated in the field coil, whereby the instantaneous startup torque can be made larger. For example, the electrostatic capacitance of the start capacitor 3 is set so that the resonance frequency of the resonance circuit constituted by the auxiliary coil 2 and the start capacitor 3 when the rotor of the single-phase induction motor 10 is stopped becomes twice or more of the frequency of the input power supply F.

In this embodiment, the cycle of performing the operation of causing the governor circuit 6 to perform transition of the auxiliary coil 2 from the non-conducting state to the conducting state and the transition to the non-conducting state again can be further selected as appropriate. For example, the cycle may be selected such that the governor circuit 6 repeats the transition operation once in the half cycle of the input power voltage V of the single-phase induction motor 10 or repeats the transition operation once each when the input power voltage V is positive and negative, that is, twice in total during the one cycle of the input power voltage V. Alternatively, by selecting the cycle selected such that the transition operation is repeated once when the voltage is positive or negative, that is, once in one cycle of the input power voltage V or is repeated once during a predetermined number of cycles (2 cycles, for example), the start capacitor 3 can accumulate more charges.

According to the present art, the torque at the motor start can be increased economically without increasing the capacitance of the start capacitor 3 or without using a plurality of the start capacitors 3.

When the rotor of the single-phase induction motor 10 starts to be rotated by the startup torque and the rotation number reaches some degree, the rotation number of the single-phase induction motor 10 reaches the rated rotation number. After the rated rotation number is reached, the control circuit 5 (or the governor circuit 6) executes the steady control of controlling the gate signal Ir of the triac to be normally on or to be normally off.

### <Steady control>

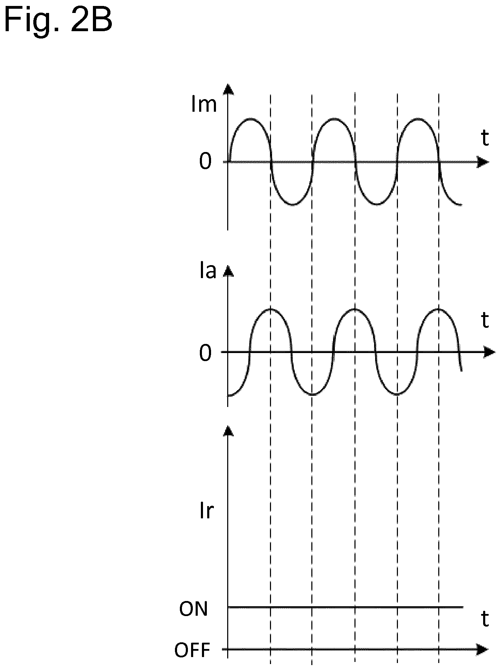

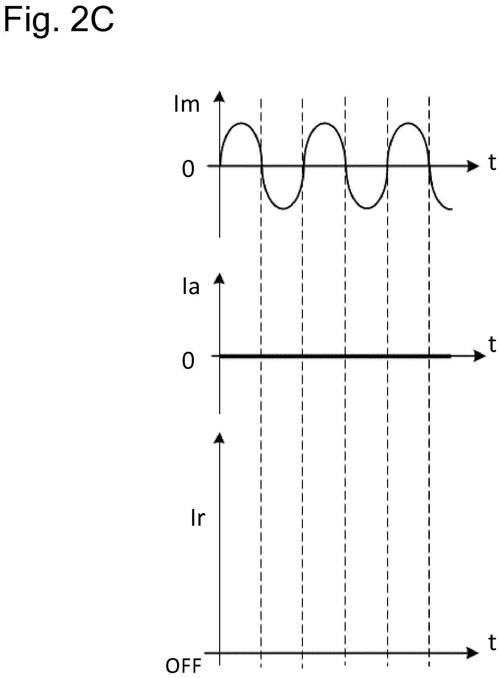

Figs. 2B and 2C both illustrate the waveform of the current Im flowing through the main coil 1 of the single-phase induction motor 10 in the steady control (upper stage in the figure), the waveform of the current Ia flowing through the auxiliary coil 2 (middle state in the figure), and the gate signal Ir waveform of the triac 4 (lower stage in the figure).

In Fig. 2B, the gate signal Ir of the triac 4 in the steady control is ON at all times. Therefore, the auxiliary coil 2 is not separated from the circuit of the single-phase induction motor 10 in the steady control. The single-phase induction motor 10 is driven by the current Ia of the auxiliary coil 2 and the current Im of the main coil 1. In the present art, since the startup torque is obtained without increasing the capacitance of the start capacitor 3, even in the capacitor-start single-phase induction motor 10, the driving efficiency of the motor in the steady control is not lowered largely.

In Fig. 2C, the gate signal Ir of the triac 4 in the steady control is turned OFF at all times. Therefore, the auxiliary coil 2 is separated from the circuit of the induction motor 10 in the steady control, and the induction motor 10 is single-phase driven by the current Im flowing through the main coil 1. In this embodiment, even if the motor has reached the rated rotation number, the start capacitor 3 is in the non-conducting state and thus, the start capacitor 3 does not work as a capacitance loss member, and the driving efficiency of the motor by the start capacitor 3 is not lowered.

### <Control circuit>

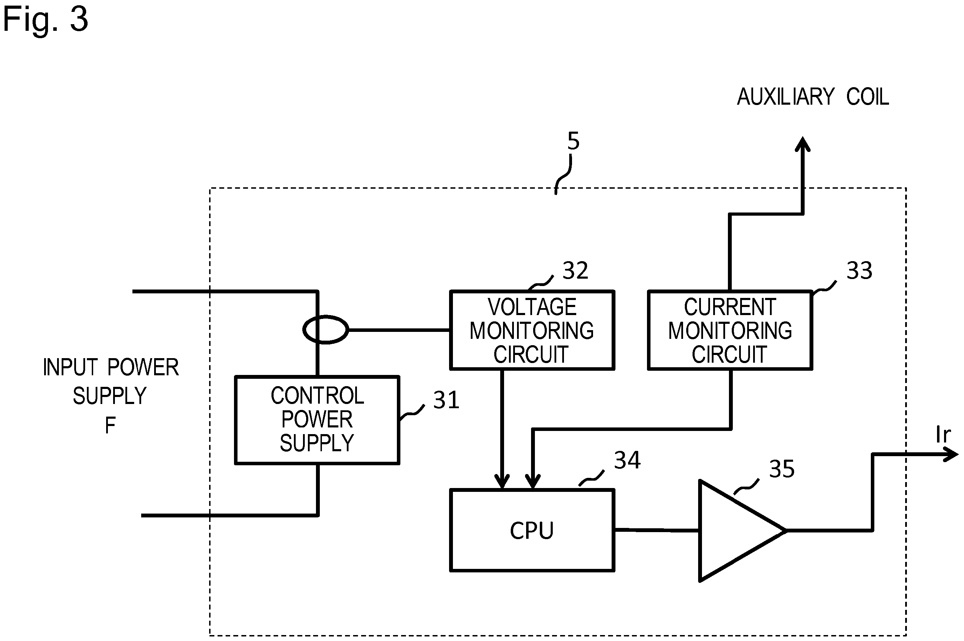

Subsequently, the control circuit 5 illustrated in Fig. 1 will be described in detail by using Figs. 3 to 6.

Fig. 3 illustrates a circuit diagram of the control circuit 5 according to the first embodiment of the present art. The control circuit 5 includes a control power supply 31, a voltage monitoring circuit 32 for monitoring the input power voltage V, a current monitoring circuit 33 for monitoring the current Ia of the auxiliary coil 2, a CPU (central processing unit) 34, and a diode 35. The control circuit 5 has an input side connected to the power supply F and has an output side connected to the auxiliary coil 2 and the triac 4.

The control power supply 31 is connected to the input power supply F and provides electricity for driving the control circuit 5. The CPU 34 generates the gate signal Ir of the triac 4 on the basis of signals from the voltage monitoring circuit 32 and the current monitoring circuit 33.

The voltage monitoring circuit 32 determines whether the absolute value of the voltage Vm of the main coil 1 has exceeded the predetermined first voltage vf1 or not in the startup control. If the predetermined first voltage vf1 is exceeded, the CPU 34 generates a gate on signal of the triac 4 on the basis of the signal from the voltage monitoring circuit 32. When the triac 4 is turned on, the start capacitor 3 is discharged, and the exciting current flows through the auxiliary coil 2. As a result, the motor 10 can obtain the startup torque.

Moreover, the voltage monitoring circuit 32 determines whether the absolute value of the voltage Vm of the main coil 1 has exceeded a predetermined second voltage vf2 or not in the startup control. If the predetermined second voltage vf2 is exceeded, the CPU 34 generates a gate off signal of the triac 4 on the basis of the signal from the voltage monitoring circuit 32.

The current monitoring circuit 33 determines whether the current Ia to the auxiliary coil 2 is substantially zero or not in the startup control. If the current Ia to the auxiliary coil 2 is substantially zero, the CPU 34 turns off the gate of the triac 4. When the triac 4 is turned off, the auxiliary coil 2 transits to the non-conducting state, and the start capacitor 3 is charged.

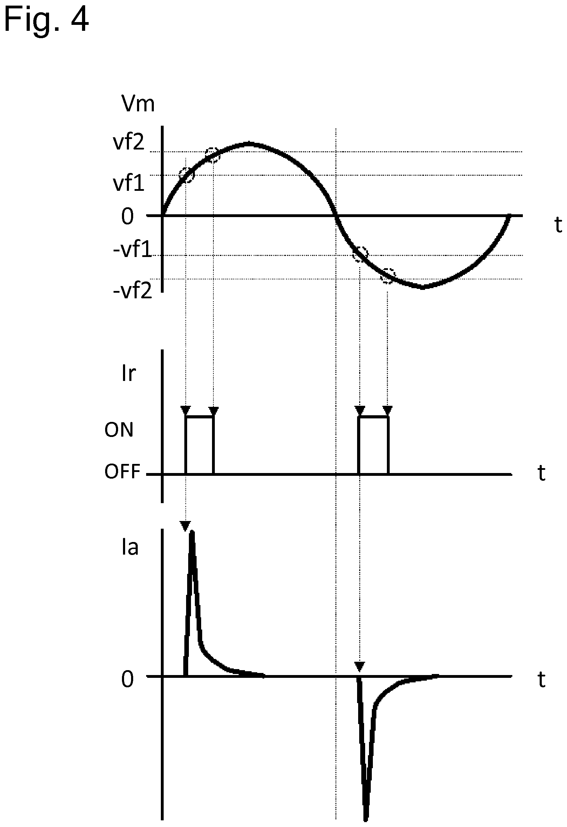

Fig. 4 illustrates various signal waveforms when the control circuit 5 illustrated in Fig. 3 is used. Fig. 4 illustrates the voltage Vm waveform of the main coil 1 (upper stage in Fig. 4), the gate signal Ir waveform of the triac 4 (middle stage in Fig. 4), and the waveform of the current Ia of the auxiliary coil 2 (lower stage in Fig. 4), respectively. As described in relation with Fig. 3, the triac 4 is controlled to be turned on when the absolute value of the main coil 1 voltage Vm exceeds the predetermined first voltage vf1. After that, if the absolute value of the main coil 1 voltage Vm exceeds the predetermined second voltage vf2, the gate signal Ir of the triac 4 is turned off. The second voltage vf2 is preferably set to a value with a large absolute value of the main coil 1 voltage Vm (a value substantially equal to the peak voltage of the power voltage Vm as illustrated in Fig. 4, for example). That is because the energy charged in the start capacitor 3 can be made larger. After the gate signal Ir to the triac 4 is turned off, at a point of time when the current Ia to the auxiliary coil 2 is substantially zero, the triac 4 is controlled to be turned off.

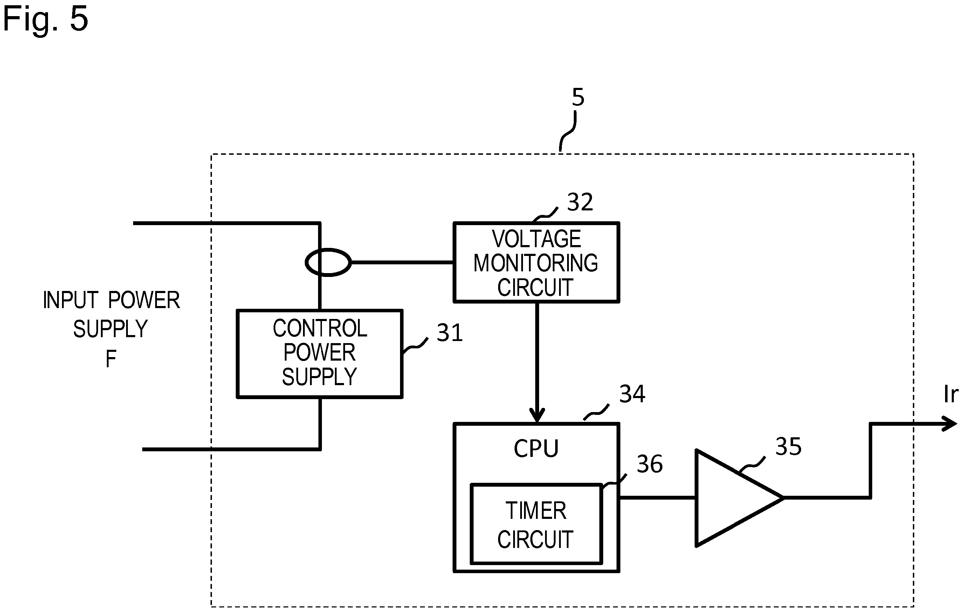

Fig. 5 illustrates a circuit diagram of the control circuit 5 according to a second embodiment of the present art. The control circuit 5 includes the control power supply 31, the voltage monitoring circuit 32 for monitoring the voltage of the input power supply F, the CPU 34, and the diode 35. The CPU 34 includes a timer circuit 36. The control circuit 5 has an input side connected to the power supply F and an output side connected to the triac 4. The CPU 34 generates the gate signal Ir of the triac 4 on the basis of the signal from the voltage monitoring circuit 32 and the signal from the timer circuit 36.

The voltage monitoring circuit 32 determines whether the absolute value of the voltage Vm of the main coil 1 has exceeded the predetermined first voltage vf1 or not in the startup control. If the predetermined first voltage vf1 is exceeded, the CPU 34 generates the gate on signal of the triac.

The timer circuit 36 sets a period of time from when the gate signal Ir of the triac 4 is turned on until it is turned off. The CPU 34 generates the gate off signal of the triac 4 after the first predetermined period of time has elapsed since the gate signal of the triac 4 is turned on. Then, at a point of time when the current Ia to the auxiliary coil 2 is substantially zero, the triac 4 is controlled to be turned off.

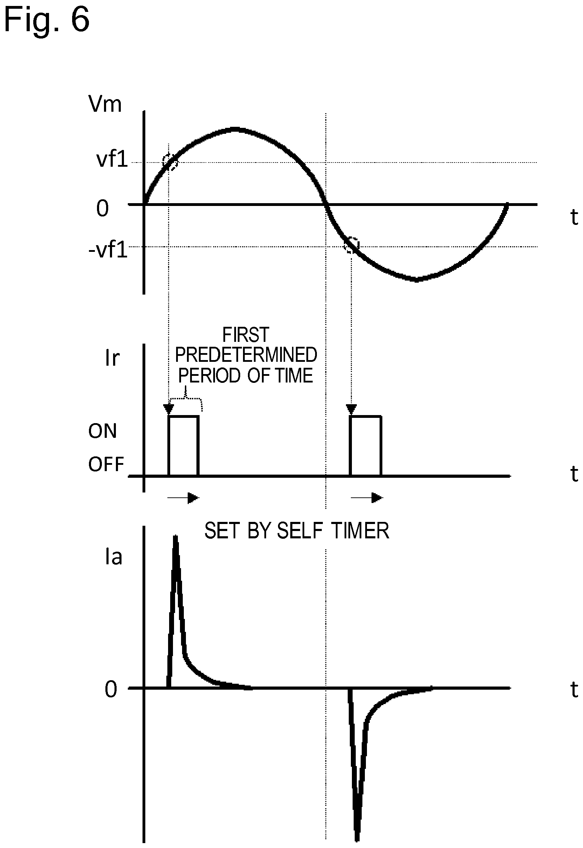

Fig. 6 illustrates various signal waveforms according to the embodiment when the control circuit 5 illustrated in Fig. 5 is used. Fig. 6 illustrates the voltage Vm waveform of the main coil 1 (upper stage in Fig. 6), the gate signal Ir of the triac 4 (middle stage in Fig. 6), and the current Ia waveform of the auxiliary coil 2 (lower stage in Fig. 6), respectively. As described in relation with Fig. 5, the triac 4 is controlled to be turned on when the voltage Vm exceeds the predetermined first voltage vf1 and after the first predetermined period of time has elapsed since it is turned on, the gate signal Ir to the triac is controlled to be turned off. When the auxiliary coil current Ia becomes substantially zero, the triac 4 is controlled to be turned off.

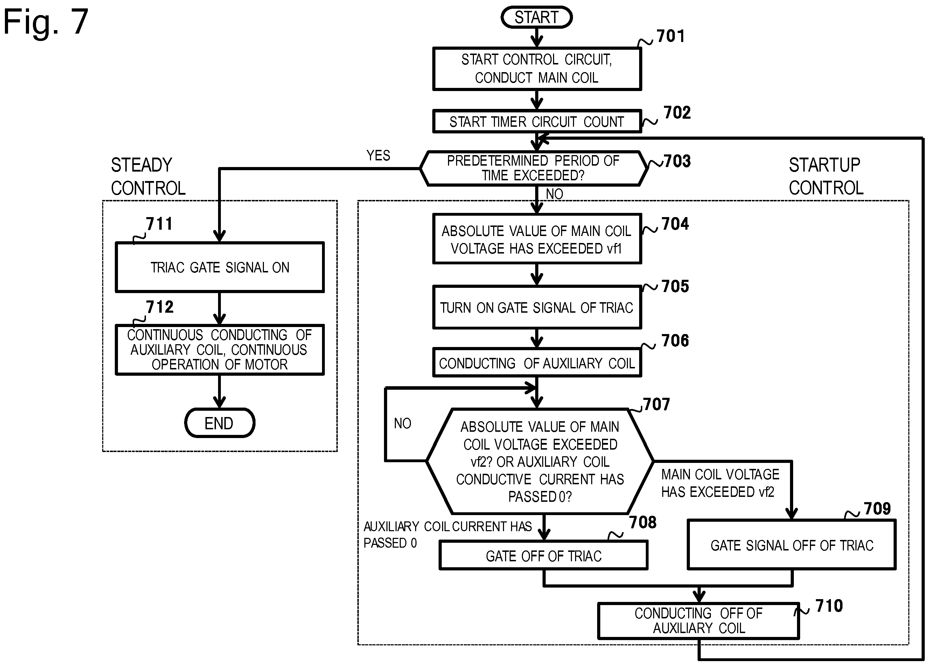

Fig. 7 illustrates an operation flowchart of the governor circuit 6 and the like according to the embodiment of the present art when the control circuit 5 illustrated in Fig. 3 is used.

First, the control power supply 31 is turned on so as to start the control circuit 5. Then, the main coil 1 is conducted (Step 701).

When the control circuit 5 is started, the timer circuit 36 starts counting (Step 702). In this embodiment, the timer circuit 36 sets a second predetermined period of time from when the governor circuit 6 causing the current to flow through the auxiliary coil 2 in the startup control is turned on until it is turned off. The second predetermined period of time is set longer than a period of time until the rated rotation number is reached, for example, on the basis of the period of time when the rotation number of the motor reaches the rated number.

Subsequently, the timer circuit 36 determines whether the second predetermined period of time has elapsed or not (Step 703). If it is determined at Step 703 that the second predetermined period of time has not elapsed, the startup control from Step 704 to 710 is executed.

The voltage monitoring circuit 32 determines whether the absolute value of the voltage Vm of the main coil 1 has exceeded the predetermined first voltage vf1 (Step 704). At Step 704, if it is determined that the absolute value of the voltage Vm of the main coil 1 has exceeded the predetermined first voltage vf1, the CPU 34 turns on the gate signal of the triac 4 (Step 705). When the triac 4 is turned on, the auxiliary coil 2 is conducted (Step 706). When the auxiliary coil 2 is conducted, the resonance state is generated by the start capacitor 3 and the auxiliary coil 2, and the current flows from the start capacitor 3 to the auxiliary coil 2.

Subsequently, the voltage monitoring circuit 32 determines whether the absolute value of the voltage Vm of the main coil 1 has exceeded the predetermined second voltage vf2 or not. Moreover, the current monitoring circuit 33 determines whether the conducting current Ia of the auxiliary coil 2 has passed zero or not (or whether it is substantially zero or not) (Step 707).

If the auxiliary coil current Ia has passed zero, the CPU 34 turns off the gate of the triac 4 (Step 708). On the other hand, when the absolute value of the voltage Vm of the main coil 1 exceeds the predetermined second voltage vf2, the CPU 34 turns off the gate signal Ir of the triac 4 (Step 709). Moreover, if the auxiliary coil current Ia has not passed zero or if the absolute value of the voltage Vm of the main coil 1 has not exceeded the predetermined second voltage vf2, the routine returns to Step 707.

Then, when the gate signal of the triac 4 is turned off and when the gate of the triac 4 is turned off, the governor circuit 6 turns off the conducting to the auxiliary coil 2 (Step 710).

At Step 703, if it is determined by the timer circuit 36 that the second predetermined period of time has elapsed, the routine goes on to Step 710. Within the second predetermined period of time, the motor reaches the rated rotation number. After the second predetermined period of time has elapsed, steady control of the motor is executed from Step 711 to 712.

The CPU 34 turns normally on the gate signal of the triac 4 (Step 711). When the triac 4 is turned on, the auxiliary coil 2 is normally conducting, and the motor is driven by the current flowing through the main coil 1 and the auxiliary coil 2 (Step 712). Then, the motor maintains the rated rotation number.

Note that in the other embodiments, the gate signal of the triac 4 may be normally OFF in the steady control. In this case, the auxiliary coil 2 is normally conducting-off, and the motor is singularly driven by the current Im flowing through the main coil 1.

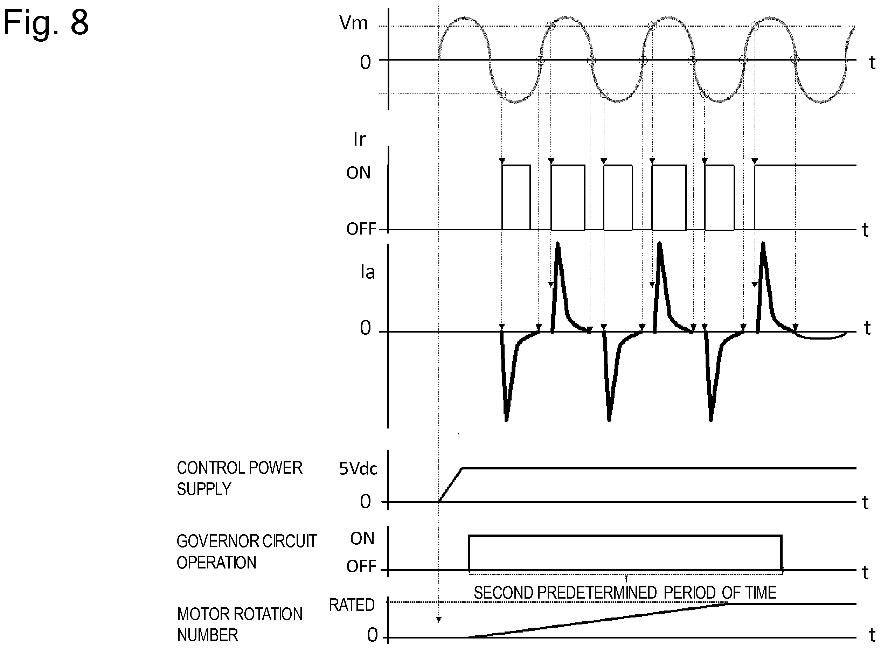

Fig. 8 illustrates waveforms of various signals according to the embodiment when the operation illustrated in Fig. 7 is performed. Fig. 8 illustrates the voltage Vm waveform of the main coil 1 (uppermost stage in Fig. 8), the gate signal Ir of the triac 4 (second stage in Fig. 8), and the current Ia waveform of the auxiliary coil 2 (third stage in Fig. 8), respectively. Moreover, Fig. 8 illustrates a voltage waveform of the control power supply 31 (fourth stage in Fig. 8), on/off of the governor circuit 6 (fifth stage in Fig. 8), and the rotation number of the motor (lowermost stage in Fig. 8), respectively. Within the second predetermined period of time during which the governor circuit 6 is turned on, the startup control is executed. In the startup control, the gate signal Ir of the triac 4 repeats on/off in accordance with the magnitude of the voltage Vm of the main coil 1. The rotation number of the motor reaches the rated, and after the second predetermined period of time has elapsed, the control changes to the steady control. In the steady control, the governor circuit 6 is normally OFF, and the gate signal of the triac is normally ON.

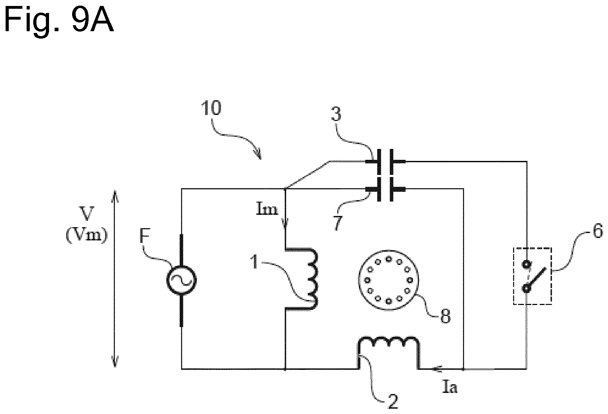

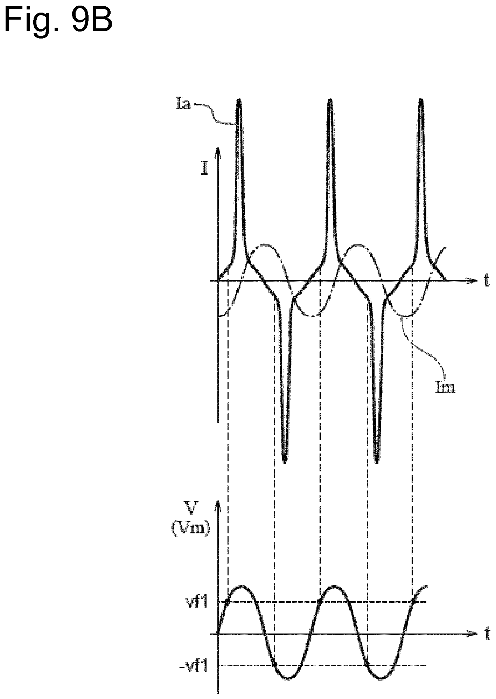

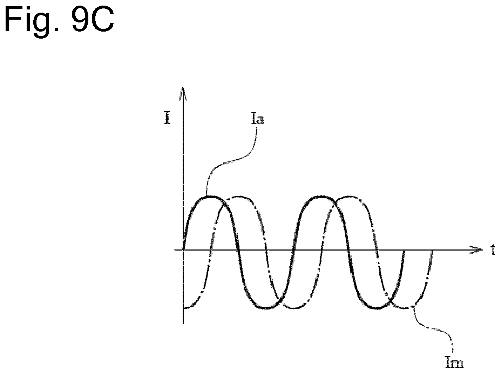

Fig. 9A to Fig. 9C are a block diagram (Fig. 9A) of the single-phase induction motor 10 and views (Fig. 9B and Fig. 9C) illustrating waveforms of the various signals in the single-phase induction motor 10 illustrated in Fig. 9A according to a third embodiment of the present art. The single-phase induction motor 10 according to this embodiment is different from the single-phase induction motor 10 illustrated in Fig. 1 in a point that one or more start capacitors (a second start capacitor 7, for example) connected in parallel with the first start capacitor 3 and connected in series with the auxiliary coil 2 is provided in addition to the first start capacitor 3.

The single-phase induction motor 10 illustrated in Fig. 9A includes the input power supply F, the main coil 1, the auxiliary coil 2, the first start capacitor 3, the second start capacitor 7, the first governor circuit 6, and a rotor 8. The main coil 1 is connected to the input power supply F, and the auxiliary coil 2 is connected in parallel with the main coil 1. The first start capacitor 3 is connected in series with the auxiliary coil 2. The second start capacitor 7 is connected in parallel with the first start capacitor 3 and is connected in series with the auxiliary coil 2. The first governor circuit 6 is connected between the first start capacitor 3 and the auxiliary coil 2. The first governor circuit 6 controls the timing of on/off of the triac 4 (see Fig. 1) as appropriate and operates as if it is a switch for switching conducting/non-conducting between the first start capacitor 3 and the auxiliary coil 2. Therefore, the first governor circuit 6 has the same configuration as the governor circuit 6 illustrated in Fig. 1 but it is illustrated as a switch in Fig. 9A.

### <Startup control>

The first governor circuit 6 cyclically repeats the operation of causing transition of the state between the first start capacitor 3 and the auxiliary coil 2 from the non-conducting state to the conducting state and of causing transition to the non-conducting state again once during a period less than a half cycle of the input power voltage V of the single-phase induction motor 10 in the startup control. Then, the first governor circuit 6 is configured such that the peak current flows from the first start capacitor 3 to the auxiliary coil 2 when transition of the state between the first start capacitor 3 and the auxiliary coil 2 is caused to the conducting state. Note that since the first governor circuit 6 operates similarly to the governor circuit 6 illustrated in Fig. 1, detailed operation description here will be omitted.

Fig. 9B illustrates a waveform of the current Im flowing through the main coil 1 of the single-phase induction motor 10 in the startup control and a waveform of the current Ia flowing through the auxiliary coil 2 on the upper stage and illustrates a waveform of the voltage V of the input power supply F (or the voltage Vm of the main coil 1) on the lower stage with the lateral axis as time (t). The current Ia flowing through the auxiliary coil 2 has a cyclic waveform having sharp peaks. The current Ia of the auxiliary coil 2 illustrated in Fig. 9B is the current flowing from the first start capacitor 3 to the auxiliary coil 2 to which the current flowing through the second start capacitor 7 is added. Therefore, according to this embodiment, as illustrated in Fig. 9B, the current Ia becomes larger than the current Ia flowing through the auxiliary coil 2 illustrated in Fig. 1 by a current portion flowing through the second start capacitor 7. Therefore, a startup torque larger than the startup torque obtained when the single-phase induction motor 10 illustrated in Fig. 1 is used can be obtained. Note that in order to obtain a sufficient startup torque on the basis of the energy (power electricity) of the input power supply F, the transition of the auxiliary coil 2 from the non-conducting state to the conducting state is preferably made when the absolute value of the voltage V (voltage Vm of the main coil 1) of the input power supply F is the predetermined first voltage vf1 or more (approximately one fifth or more of the peak voltage of the absolute value of the power voltage V, for example).

### <Steady control>

Fig. 9C illustrates a waveform of the current Im flowing through the main coil 1 of the single-phase induction motor 10 illustrated in Fig. 9A in the steady control and a waveform of the current Ia flowing through the auxiliary coil 2 with the lateral axis as time (t). When the first start capacitor 3 and the auxiliary coil 2 are in the normally conducting state (that is, if the gate signal Ir of the triac 4(see Fig. 1) of the first governor circuit 6 is normally ON), as illustrated in Fig. 9C, the current Im flows through the main coil 1 and the current Ia through the auxiliary coil Ia. The phase of the current Ia advances by approximately one fourth of the cycle with respect to the current Im by the first start capacitor 3. The single-phase induction motor 10 is driven by the current Im of the main coil 1 and the current Ia of the auxiliary coil 2. At this time, the current Ia of the auxiliary coil 2 is the sum of the currents flowing through the first start capacitor 3 and the second start capacitor 7. On the other hand, if the first start capacitor 3 and the auxiliary coil 2 are in the normally non-conducting state, the single-phase induction motor 10 is driven by the current Ia of the auxiliary coil 2 made only of the current flowing through the second start capacitor 7 and the current Im of the main coil 1.

In this embodiment, in the steady control, the conducting state between the first start capacitor 3 and the auxiliary coil 2 (normally conducting state, normally non-conducting state) can be selected as appropriate by using the first governor circuit 6. That is, in the steady control, the number of the start capacitors (capacitor capacitance) connected to the auxiliary coil 2 can be selected as appropriate.

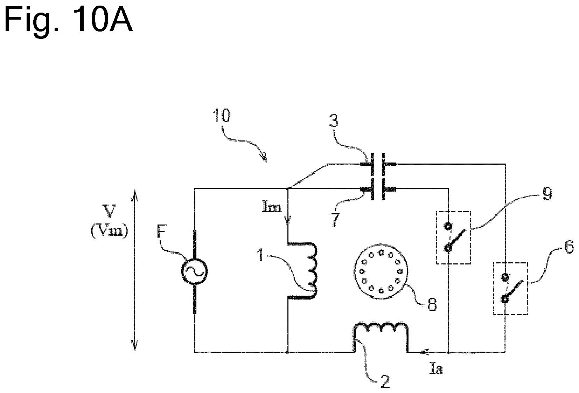

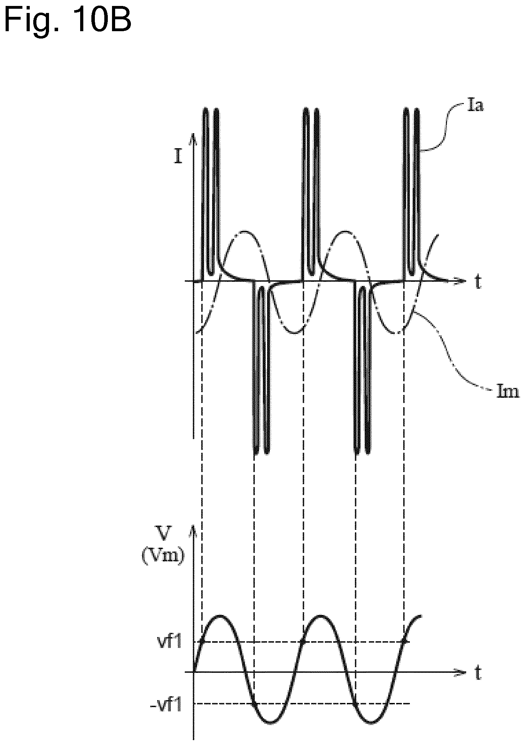

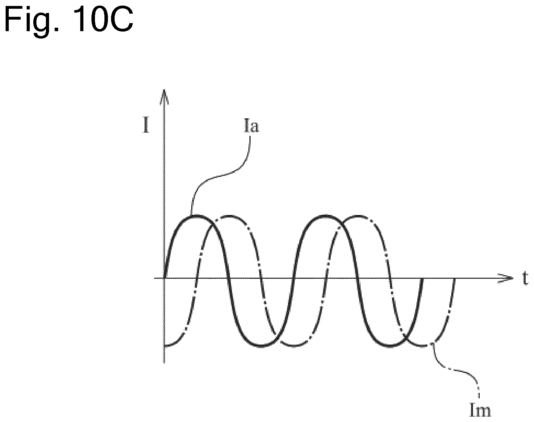

Figs. 10A to 10C are a block diagram (Fig. 10A) of the single-phase induction motor 10 according to the fourth embodiment of the present art and views illustrating various signal waveforms (Fig. 10B and 10C) in the single-phase induction motor 10 illustrated in Fig. 10A. The single-phase induction motor 10 according to this embodiment is different from the single-phase induction motor 10 illustrated in Fig. 9A in a point that, in addition to the first governor circuit 6, one or more governor circuits (the second governor circuit 9 in Fig. 10A, for example) are further provided. Each of the one or more governor circuits is connected between the one start capacitor connected in parallel with the first start capacitor 3 and the auxiliary coil 2. Description on configuration equivalent to the single-phase induction motor 10 illustrated in Fig. 10A will be omitted.

### <Startup control>

Fig. 10A is an example of a block diagram of the single-phase induction motor 10 in the startup control. The single-phase induction motor 10 illustrated in Fig. 10A includes the second governor circuit 9. The second governor circuit 9 is connected between the second start capacitor 7 connected in parallel with the first start capacitor 3 and the auxiliary coil 2. The second governor circuit 9 is configured to execute control of the current supplied from the second start capacitor 7 to the auxiliary coil 2. The second governor circuit 9 cyclically repeats an operation of causing transition of the state between the second start capacitor 7 and the auxiliary coil 2 from the non-conducting state to the conducting state and of causing transition to the non-conducting state again once during a period less than a half cycle of the input power voltage V of the single-phase induction motor 10 in the startup control similarly to the first governor circuit 6 illustrated in Fig. 9A. In this embodiment, as an example, control is executed such that on/off timing of the first governor circuit 6 and the second governor circuit 9 are made different.

Fig. 10B illustrates a waveform of the current Im flowing through the main coil 1 of the single-phase induction motor 10 in the startup control and a waveform of the current Ia flowing through the auxiliary coil 2 on an upper stage, and a waveform of the voltage V of the input power supply F on a lower stage with the lateral axis as time (t). A scale of the time(t) on the lateral axis is the same for all the stages. In Fig. 10B, two peaks intermittently occur in the current Ia of the auxiliary coil 2 during a period less than the half cycle of the input power voltage V. One peak of the current Ia is generated at timing when the first governor circuit 6 causes transition of the state between the first start capacitor 3 and the auxiliary coil 2 from the non-conducting state to the conducting state, while another peak is generated at timing when the second governor circuit 9 causes transition of the state between the second start capacitor 7 and the auxiliary coil 2 from the non-conducting state to the conducting state.

In this embodiment, the timing when the transition of the state between the first start capacitor 3 and the auxiliary coil 2 from the non-conducting state to the conducting state is caused is made different from the timing when transition of the state between the second start capacitor 7 and the auxiliary coil 2 from the non-conducting state to the conducting state is caused by using the first governor circuit 6 and the second governor circuit 9 during a period less than a half cycle of the input power voltage V. As a result, two peaks of the current Ia can be generated during the period less than the half cycle of the input power voltage V, and maximum torque maintaining time per unit time of the single-phase induction motor 10 can be prolonged. As a result, a startup torque amount of the single-phase induction motor 10 per unit time can be increased. Note that the timing of causing the transition of the state between each of the start capacitors and the auxiliary coil 2 from the non-conducting state to the conducting state may be made the same. In this case, one peak is generated in the current Ia during the period less than the half cycle of the input power voltage V. And the magnitude of the peak in the current Ia becomes a value of the sum of the currents flowing from each of the two start capacitors to the auxiliary coil 2.

As described above, in this embodiment, the timing of causing the transition of the state between each of the start capacitors and the auxiliary coil 2 from the non-conducting state to the conducting state during the period less than the half cycle of the input power voltage V can be selected as appropriate. By selecting the timing of causing the transition of each of the plurality of governor circuits from the non-conducting state to the conducting state as appropriate, an interval of the peaks generated during the period less than the half cycle of the input power voltage V, the number of peaks, and the size of the peak can be adjusted, and as a result, a way of a rotary motion of the rotor 8 can be adjusted as appropriate.

Note that it is preferable, while the absolute value of the voltage V of the input power supply F is the predetermined first voltage vf1 or more or for example, approximately one fifth or more of the peak voltage of the absolute value of the power voltage V, the first governor circuit 6 causes the transition of the state between the first start capacitor 3 and the auxiliary coil 2 from the non-conducting state to the conducting state, and the second governor circuit 9 causes the transition of the state between the second start capacitor 7 and the auxiliary coil 2 from the non-conducting state to the conducting state.

Moreover, the capacitance of the first start capacitor 3 and the capacitance of the second start capacitor 7 can be selected arbitrarily. By selecting the capacitance of the first start capacitor 3 and the capacitance of the second start capacitor 7 as appropriate, the size of the peak in the current Ia of the auxiliary coil 2 generated during the period less than the half cycle of the input power voltage V can be adjusted, and as the result, a way of rotary motion of the rotor 8 can be adjusted.

### <Steady control>

Fig. 10C is a view illustrating the waveform of the current Im flowing through the main coil 1 of the single-phase induction motor 10 illustrated in Fig. 10A in the steady control and the waveform of the current Ia flowing through the auxiliary coil 2 with the lateral axis as time(t). For example, if the space between the first start capacitor 3 and the auxiliary coil 2 is in the normally conducting state (that is, the gate signal Ir of the triac 4 in the first governor circuit 6 (see Fig. 1) is normally on) and the space between the second start capacitor 7 and the auxiliary coil 2 is in the normally non-conducting state (that is, the gate signal of the triac of the second governor circuit 9 is normally off) or in the normally conducting state(that is, the gate signal of the triac of the second governor circuit 9 is normally on), as illustrated in Fig. 10C, the current Im flows through the main coil 1, and the current Ia with the phase advanced by approximately one fourth cycle with respect to the current Im flows through the auxiliary coil Ia. Note that when the space between the second start capacitor 7 and the auxiliary coil 2 is in the normally non-conducting state, the current Ia of the auxiliary coil 2 becomes a current flowing only through the first start capacitor 3. Then, the single-phase induction motor 10 is driven by the current Ia of the auxiliary coil 2 and the current Im of the main coil 1 in the steady control.

On the other hand, if the space between the first start capacitor 3 and the auxiliary coil 2 is in the normally non-conducting state and the space between the second start capacitor 7 and the auxiliary coil 2 is in the normally non-conducting state, for example, the first start capacitor 3 and the second start capacitor 7 are both separated from the circuit of the single-phase induction motor 10. Therefore, the single-phase induction motor 10 is single-phase driven by the current Im of the main coil 1.

In this embodiment, in the steady control, the conducting state between the first start capacitor 3 and the auxiliary coil 2 (normally conducting state, normally non-conducting state) is selected as appropriate by using the first governor circuit 6, and the conducting state between the second start capacitor 7 and the auxiliary coil 2 (normally conducting state, normally non-conducting state) can be selected as appropriate by using the second governor circuit 9. As a result, in the steady control, the number of start capacitors (capacitor capacitance) connected to the auxiliary coil 2 can be selected as appropriate.

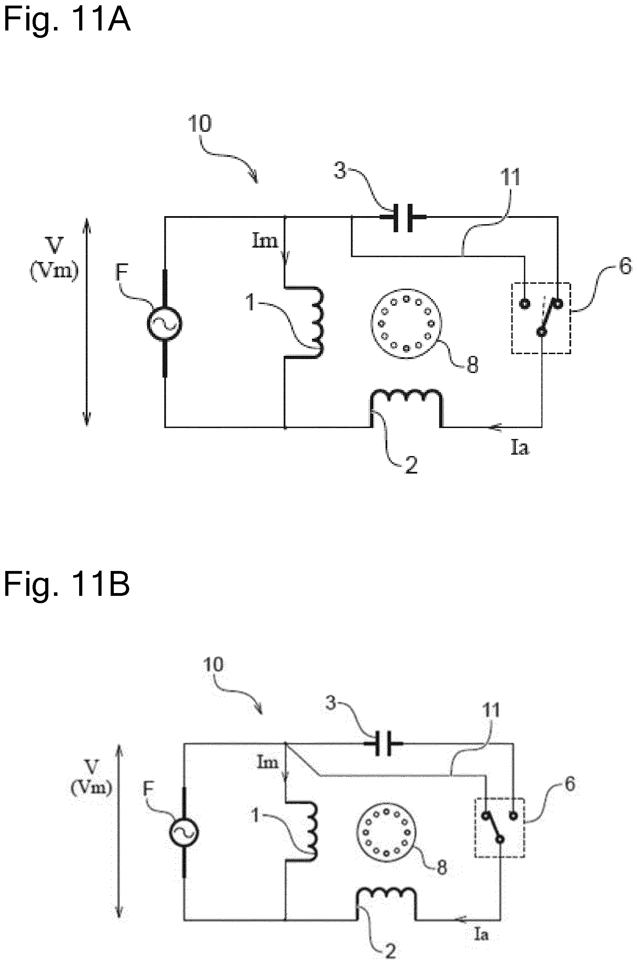

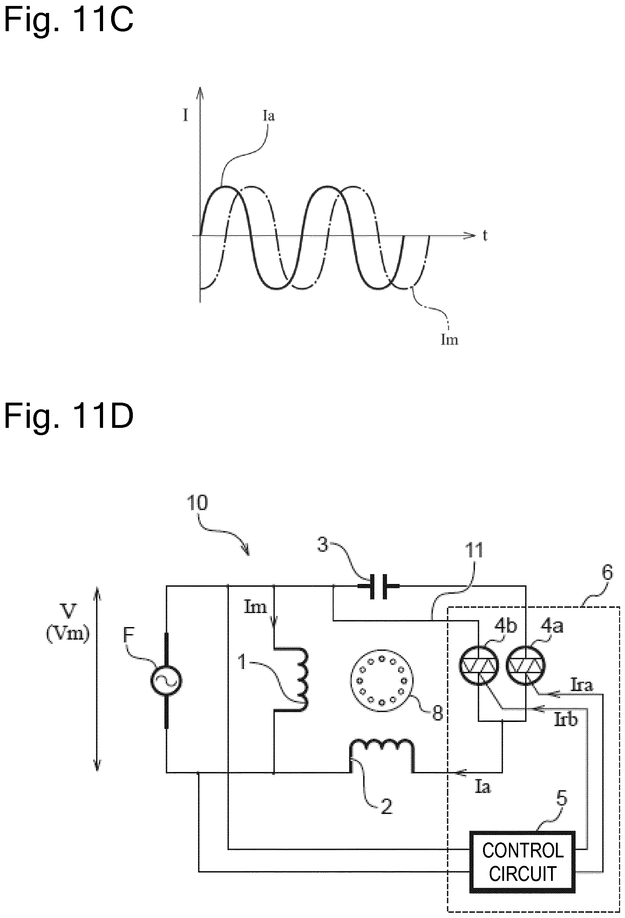

Figs. 11A to 11C are block diagrams (Figs. 11A and 11B) of the single-phase induction motor 10 according to a fifth embodiment of the present art and a view (Fig. 11C) illustrating various signal waveforms in the single-phase induction motor 10. As illustrated in Figs. 11A and 11B, the single-phase induction motor 10 according to this embodiment is different from the single-phase induction motor 10 illustrated in Fig. 1 in a point that a path 11 capable of directly connecting the main coil 1 and the auxiliary coil 2 is provided without through the first start capacitor 3. The path 11 is configured capable of direct connection between the first governor circuit 6 and the main coil 1. Moreover, the first governor circuit 6 is configured capable of switching between the first start capacitor 3 and the auxiliary coil 2 or between the path 11 and the auxiliary coil 2. That is, in the first governor circuit 6, one end is connected to the auxiliary coil 2, and the other end can be connected to the path 11 or to the first start capacitor 3. Therefore, the first governor circuit 6 is configured so as to switch direct conducting between the main coil 1 and the auxiliary coil 2 not through the first start capacitor 3 in addition to switching of conducting/non-conducting between the first start capacitor 3 and the auxiliary coil 2.

### <Startup control>

Fig. 11A is a block diagram of the single-phase induction motor 10 in the startup control. In the startup control, the first governor circuit 6 is not connected to the path 11. The first governor circuit 6 cyclically repeats the operation of causing transition of the state between the first start capacitor 3 and the auxiliary coil 2 from the non-conducting state to the conducting state and of causing transition to the non-conducting state again once during the period less than the half cycle of the input power voltage V of the single-phase induction motor 10. Then, the first governor circuit 6 is configured such that the peak current flows from the first start capacitor 3 to the auxiliary coil 2 when transition of the state between the first start capacitor 3 and the auxiliary coil 2 to the conducting state is caused. That is, in the startup control, the first governor circuit 6 according to this embodiment performs the operation similar to that of the governor circuit 6 illustrated in Fig. 1. Therefore, the waveform of the current Ia flowing through the auxiliary coil 2 is the same as the waveform of the auxiliary coil 2 current Ia illustrated in Fig. 2A.

### <Steady control>

Fig. 11B is a block diagram of the single-phase induction motor 10 in the steady control according to this embodiment, and Fig. 11C is a view illustrating the various signal waveforms in the single-phase induction motor 10 in the steady control. In the steady control, the first governor circuit 6 is connected to the path 11 at all times, the first start capacitor 3 is separated from the circuit of the single-phase induction motor 10, and only the auxiliary coil 2 is connected in parallel with the main coil 1. In this case, since the first start capacitor 3 is not connected to the auxiliary coil 2, if the impedance of the main coil 1 and the impedance of the auxiliary coil 2 are the same, the current Ia of the auxiliary coil 2 and the current Im of the main coil 1 have the same phase. In this embodiment, in order to provide a phase difference between the current Im flowing through the main coil and the current Ia flowing through the auxiliary coil 2, a difference is provided between the impedance of the main coil 1 and the impedance of the auxiliary coil 2. The phase of the current is determined in accordance with the impedance of the coil and thus, by providing the difference between the impedance of the main coil 1 and the impedance of the auxiliary coil 2 (by making the winding number of the main coil 1 larger than the winding number of the auxiliary coil 2 and by making the impedance of the main coil 1 larger than the impedance of the auxiliary coil 2), the phase difference can be generated between the current Im flowing through the main coil and the current Ia flowing through the auxiliary coil 2. And the single-phase induction motor 10 is driven by the current Ia of the auxiliary coil 2 and the current Im of the main coil 1 having the phase difference illustrated in Fig. 11C. In this embodiment, the phase difference is provided between the current Ia of the auxiliary coil 2 and the current Im of the main coil 1 by using the difference in the impedances of the coils without using the start capacitor so as to create a rotating magnetic field, whereby the single-phase induction motor 10 can be driven.

Note that Figs. 11A and 11B schematically illustrate the first governor circuit 6. The first governor circuit 6 is configured as illustrated in Fig. 11D in more detail. The two triacs 4 (a first triac 4a and a second triac 4b) are connected in parallel with the main coil 1 and in series with the auxiliary coil 2, respectively. The first triac 4a is connected between the first start capacitor 3 and the auxiliary coil 2, and the second triac 4b is connected between the path 11 and the auxiliary coil 2. The control circuit 5 controls timing of turning on/off of the first triac 4a and the second triac 4b as appropriate, respectively. In the startup control, the control circuit 5 controls on/off of the first triac 4a so that the peak current flows from the first start capacitor 3 to the auxiliary coil 2 and also controls the second triac 4b to be normally off. Moreover, in the steady control, the control circuit 5 controls the first triac 4a to be normally off and controls the second triac 4b to be normally on.

### REFERENCE SIGNS LIST

1 main coil, 2 auxiliary coil, 3 (first) start capacitor, 4 triac, 5 control circuit, 6 (first) governor circuit, 7 second start capacitor, 8 rotor, 9 second governor circuit, 10 capacitor-start single-phase induction motor, 31 control power supply, 32 voltage monitoring circuit, 33 current monitoring circuit, 35 diode, 36 timer circuit

## Claims

1. A single-phase induction motor comprising:
a main coil;
an auxiliary coil connected in parallel with the main coil;
a capacitor connected in series with the auxiliary coil; and
a governor circuit executing control of a current supplied from the capacitor to the auxiliary coil, wherein
the governor circuit executes startup control of repeating an operation of causing transition of the auxiliary coil from a non-conducting state to a conducting state and of causing transition to the non-conducting state again once during a period less than a half cycle of an input power voltage of the single-phase induction motor, and the current flows from the capacitor to the auxiliary coil when the auxiliary coil is in the conducting state.

2. The single-phase induction motor according to claim 1, wherein
the governor circuit includes:
a triac connected in series with the auxiliary coil; and
a control circuit connected to the triac and generating a gate signal of the triac, wherein
the startup control is executed by switching/controlling the triac on the basis of the gate signal.

3. The single-phase induction motor according to claim 1, wherein
the governor circuit is set so as to repeat an operation of causing transition from the non-conducting state to the conducting state and of causing transition to the non-conducting state again:
once during a half cycle of the input power voltage; and
once each when the input power voltage is positive and negative during one cycle of the input power voltage, that is, twice in total; and
once when the input power voltage is positive or negative during one cycle of the input power voltage; or
once during a predetermined number of cycles of the input power voltage.

4. The single-phase induction motor according to claim 1, wherein
the governor circuit is configured to execute the startup control during a period of time from when the single-phase induction motor is powered on until the single-phase induction motor has reached a predetermined rotation speed and to execute steady control after the single-phase induction motor has reached the predetermined rotation speed.

5. The single-phase induction motor according to claim 4, wherein
the auxiliary coil is brought into the normally conducting state in the steady control.

6. The single-phase induction motor according to claim 4, wherein
the auxiliary coil is brought into the normally non-conducting state in the steady control.

7. The single-phase induction motor according to claim 1, wherein
the governor circuit causes transition of the auxiliary coil from the non-conducting state to the conducting state if an absolute value of the input power voltage rises to a predetermined voltage or more in the startup control and causes transition to the non-conducting state again when a resonance current by the capacitor and the auxiliary coil becomes substantially zero.

8. The single-phase induction motor according to claim 1, wherein
the governor circuit executes the startup control for a predetermined period of time from when the input power voltage is supplied and changes to the steady control after the predetermined time has elapsed.

9. The single-phase induction motor according to any one of claims 1 to 8, wherein
the electrostatic capacitance of the capacitor is set so that a resonance frequency of a resonance circuit constituted by the auxiliary coil when a rotor of the single-phase induction motor is stopped and the capacitor is twice or more of a frequency of the input power voltage.

10. The single-phase induction motor according to claim 7, wherein
a gate signal of the triac connected in series with the auxiliary coil is turned on when the predetermined voltage is one fifth or more of a peak voltage of the input power voltage.

11. The single-phase induction motor according to claim 2, wherein
the triac is turned off when an absolute value of the input power voltage is substantially equal to a peak voltage of the input power voltage.

12. The single-phase induction motor according to claim 2, wherein
a period of time from when a gate signal of the triac is turned on until it is turned off is shorter than a half cycle of a resonance cycle of a resonance circuit constituted by the auxiliary coil and the capacitor.

13. A single-phase induction motor comprising:
a main coil;
an auxiliary coil connected in parallel with the main coil;
a first capacitor connected in series with the auxiliary coil;
a second capacitor connected in parallel with the first capacitor and connected in series with the auxiliary coil; and
a first governor circuit connected between the first capacitor and the auxiliary coil and configured to control a current supplied from the first capacitor to the auxiliary coil, wherein
the first governor circuit is configured to execute startup control of repeating an operation of causing transition of the auxiliary coil from a non-conducting state to a conducting state and of causing transition to the non-conducting state again once during a period less than a half cycle of an input power voltage of the single-phase induction motor so that a current flows to the auxiliary coil from the first capacitor when the auxiliary coil is in the conducting state.

14. The single-phase induction motor according to claim 13, wherein
the first governor circuit brings a state between the first capacitor and the auxiliary coil into a normally conducting state or in a normally non-conducting state in steady control.

15. The single-phase induction motor according to claim 13, further comprising:
a second governor circuit connected between the second capacitor and the auxiliary coil and configured to execute control of a current supplied from the second capacitor to the auxiliary coil, wherein
the second governor circuit is configured to execute startup control of repeating an operation of causing transition of the auxiliary coil from a non-conducting state to a conducting state and of causing transition to the non-conducting state again once during a period less than a half cycle of an input power voltage of the single-phase induction motor so that a current flows to the auxiliary coil from the second capacitor when the auxiliary coil is in the conducting state.

16. The single-phase induction motor according to claim 15, wherein
while an absolute value of the input power voltage of the single-phase induction motor is one fifth or more of a peak voltage of the input power voltage, the first governor circuit causes transition of a state between the first capacitor and the auxiliary coil from a non-conducting state to a conducting state, and the second governor circuit causes transition of a state between the second capacitor and the auxiliary coil from the non-conducting state to the conducting state.

17. The single-phase induction motor according to claim 15 or 16, wherein
a timing when the first governor circuit causes transition of the state between the first capacitor and the auxiliary coil from a non-conducting state to a conducting state and a timing when the second governor circuit causes transition of the state between the second capacitor and the auxiliary coil from the non-conducting state to the conducting state are different.

18. The single-phase induction motor according to any one of claims 15 to 17, wherein
a capacitance of the first capacitor and a capacitance of the second capacitor can be arbitrarily selected.

19. A single-phase induction motor comprising:
a main coil;
an auxiliary coil connected in parallel with the main coil;
a first capacitor connected in series with the auxiliary coil; and
a first governor circuit connected between the first capacitor and the auxiliary coil and configured to control a current supplied from the first capacitor to the auxiliary coil, wherein
the first governor circuit is configured to execute startup control of repeating an operation of causing transition of the auxiliary coil from a non-conducting state to a conducting state and of causing transition to the non-conducting state again once during a period less than a half cycle of an input power voltage of the single-phase induction motor so that a current flows to the auxiliary coil from the first capacitor when the auxiliary coil is in the conducting state.

20. The single-phase induction motor according to claim 19, further comprising:
a path which can connect the first governor circuit and the main coil, wherein
the first governor circuit is connected to the path at all times in the steady control, whereby the main coil and the auxiliary coil having impedance different from that of the main coil are directly conducted.
